(19) Europäisches Patentamt
European Patent Office
Office européen des brevets

(11)　EP 2 410 361 B1

(12)　FASCICULE DE BREVET EUROPEEN

(45) Date de publication et mention
de la délivrance du brevet:
**08.07.2015 Bulletin 2015/28**

(51) Int Cl.:
**G02B 6/122** *(2006.01)*　　**G02B 6/30** *(2006.01)*
**G02B 6/34** *(2006.01)*　　**G02B 6/124** *(2006.01)*
**G02B 6/12** *(2006.01)*

(21) Numéro de dépôt: **11305945.5**

(22) Date de dépôt: **20.07.2011**

(54) **Guide d'onde planaire nanophotonique comportant une structure de couplage optique avec une fibre optique**

Planarer, nanophotonischer Wellenleiter, der eine optische Kupplungsstruktur mit einer optischen Faser umfasst

Planar nanophotonic waveguide comprising a structure for optical coupling with an optical fibre

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.07.2010 FR 1056033**

(43) Date de publication de la demande:
**25.01.2012 Bulletin 2012/04**

(73) Titulaire: **COMMISSARIAT A L'ENERGIE ATOMIQUE ET AUX ENERGIES ALTERNATIVES**
**75015 Paris (FR)**

(72) Inventeurs:
• **Kopp, Christophe**
**38120 FONTANIL-CORNILLON (FR)**
• **Bernabe, Stéphane**
**38430 MOIRANS (FR)**

(74) Mandataire: **Vuillermoz, Bruno et al**
**Cabinet Laurent & Charras**
**"Le Contemporain"**
**50, Chemin de la Bruyère**
**69574 Dardilly Cédex (FR)**

(56) Documents cités:
**EP-A1- 1 496 378　　US-A1- 2005 094 938**
**US-A1- 2007 031 088**

• DIRK TAILLAERT ET AL: "An Out-of-Plane Grating Coupler for Efficient Butt-Coupling Between Compact PlanarWaveguides and Single-Mode Fibers", IEEE JOURNAL OF QUANTUM ELECTRONICS, vol. 38, no. 7, 1 juillet 2002 (2002-07-01), XP011065233, PISCATAWAY, NJ, USA ISSN: 0018-9197
• VIVIEN L ET AL: "Light injection in SOI microwaveguides using high-efficiency grating couplers", JOURNAL OF LIGHTWAVE TECHNOLOGY, vol. 24, no. 10, octobre 2006 (2006-10), pages 3810-3815, XP002616666, IEEE USA ISSN: 0733-8724, DOI: 10.1109/JLT. 2006.878060

EP 2 410 361 B1

**Description**

**DOMAINE DE L'INVENTION**

L'invention concerne le domaine des composants optoélectroniques, notamment les circuits nanophotoniques définis par des guides d'ondes de dimension inférieure au micromètre.

Plus particulièrement, l'invention se rapporte au couplage de tels circuits nanophotoniques avec des fibres optiques monomodes, dont le coeur est de dimension très supérieure au micromètre.

**ETAT DE LA TECHNIQUE**

Les technologies de guides d'onde optiques planaires, c'est-à-dire à géométrie rectangulaire, permettent d'intégrer sur une même puce de façon très compacte des fonctions complexes de gestion de faisceaux optiques, comme par exemple le multiplexage, le démultiplexage, la modulation ou le routage spectral.

Non seulement, les guides d'onde optiques planaires permettent la mise en oeuvre de fonctions nécessaires, aussi bien pour des liaisons optiques sur de très courtes distances de l'ordre du millimètre, comme par exemple des liaisons optiques internes à une puce, que sur de très longues distances de l'ordre de plusieurs kilomètres, comme par exemple des liaisons sur une réseau de communication métropolitain, mais en outre de tels guides d'onde permettent d'assurer des débits de données très élevés et constituent ainsi des technologies privilégiées en réponse à l'augmentation constante de la demande en termes de débit.

Par ailleurs, l'intégration d'un nombre croissant de fonctions optiques sur une même surface de puce nécessitent une miniaturisation poussée des circuits optiques, conduisant donc à une miniaturisation croissante de la section des guides optiques planaires, et ce jusqu'à des dimensions submicroniques, d'où la référence à des guides « nanophotoniques ». Ainsi, il n'est pas rare d'avoir des sections de guides optiques de 0,5 micromètre par 0,2 micromètres pour des coeurs de guide d'onde de section rectangulaire.

Or, pour les applications de moyennes et de longues distances, c'est-à-dire des applications nécessitant un transport de données sur des distances de quelques mètres à plusieurs kilomètres, le seul médium de transport approprié est la fibre optique, qui présente une section d'un diamètre supérieur à la dizaine de micromètres, voire supérieure à la centaine de micromètres. Par conséquent, il est nécessaire de prévoir des systèmes d'adaptation ou de couplage, entre les guide d'ondes planaires nanophotoniques et les fibres optiques, afin de compenser cette désadaptation de dimensions sans cesse croissante, ainsi que de compenser un comportement différent des guides d'ondes et des fibres optiques vis-à-vis de la polarisation de la lumière.

Usuellement, l'adaptation ente un guide d'onde nanophotonique planaire monomode et une fibre optique monomode est réalisée par un élément de couplage surfacique comprenant un « *taper* », formé dans le guide d'onde qui adapte les dimensions du guide à celle de la fibre, et un élément optique qui fait l'interface entre le « *taper* » et la fibre optique, avantageusement un réseau de diffraction formé de fentes périodiques.

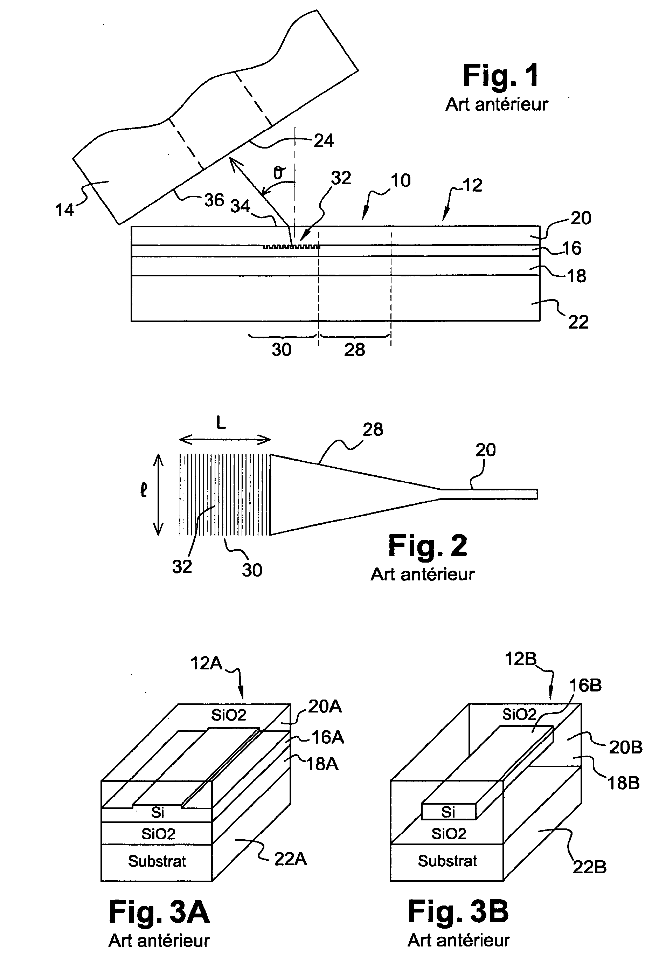

Les figures 1 et 2 sont respectivement une vue en coupe et une vue de dessus en détail d'une telle structure de couplage optique **10** de l'état de la technique, réalisée dans un guide d'onde planaire nanophotonique monomode **12**, et destinée au couplage optique avec une fibre optique monomode **14**. Les figures 3A et 3B sont quant à elles des vues en perspective de deux variantes de réalisation d'un guide d'onde planaire nanophotonique 12 de l'état de la technique.

Un guide d'onde planaire **12** comporte, pour le transport de lumière dans un circuit nanophotonique, un coeur de guide **16** de dimension submicronique, par exemple en silicium, en phosphure d'indium, en nitrure de silicium, ou en silice dopée avec du photophore, du bore ou du germanium. Le coeur **16** est intercalé entre des gaines planes inférieure **18** et supérieure **20,** par exemple en silice, en nitrure de silicium, en silice dopée avec du photophore, du bore ou du germanium, en oxyde de silicium, ou constituées d'air. Cet empilement est lui même formé sur un substrat **22,** par exemple en silicium.

Le coeur 16 du guide d'onde planaire **12** peut prendre différentes géométries, comme par exemple avoir une section en forme de T, telle qu'illustrée à la figure 3A (guide d'onde de type « arrête »), ou avoir une section rectangulaire, telle qu'illustrée à la figure 3B (guide d'onde de type « ruban »).

Par ailleurs, la fibre optique monomode **14**, de forme cylindrique, comprend un coeur de fibre cylindrique **24,** enrobé d'une gaine cylindrique **24**. Le diamètre du coeur **24** de la fibre **14** est usuellement inférieur à 10 micromètres pour les fibres monomodes et le diamètre extérieur de la gaine **24** est usuellement de l'ordre de la centaine de micromètres.

La structure et le fonctionnement du guide d'onde planaire **12** et la fibre optique monomode **14** venant d'être décrits sont bien connus de l'état de la technique et ne seront donc pas décrits plus en détail pour des raisons de concision.

Le guide d'onde **12** comporte par ailleurs une structure de couplage optique qui permet de transmettre la lumière depuis le coeur **16** du guide d'onde **12**, aux dimensions submicroniques, vers le coeur **24** de la fibre optique **14**, de diamètre usuellement compris entre 8 et 10 micromètres, et vice versa, qui comporte :

■ une région **28**, communément appelée « *taper* », qui consiste en un élargissement progressif du coeur **16** du guide d'onde planaire **12**, la région **28** se terminant sur une région plane élargie **30** de dimensions compatibles avec le diamètre du coeur **24** de la fibre **14**; et

■ un réseau périodique de fentes parallèles **32**, perpendiculaires à la direction principale du guide d'onde planaire **12**, gravées sur la face supérieure de la région élargie 30, de longueur *L* et de largeur *l* supérieures ou égales au diamètre du coeur **24** de la fibre **14**.

Le réseau **32** forme ainsi un réseau de diffraction permettant à la lumière contenue dans la région **30** de s'échapper, via la gaine supérieure **20**, vers la fibre optique **14**, et la lumière en provenance de la fibre optique **14** d'entrer, via la gaine supérieure **20,** dans la région **30**. Les caractéristiques du réseau **32** sont déterminées pour une longueur d'onde à transmettre entre le guide **12** et la fibre **14**.

La lumière est donc échangée entre le guide d'onde **12** et la fibre optique **14** au travers d'une surface plane **34** de la gaine supérieure **20**, ci-après dénommée « surface de couplage ».

Un problème majeur de ce type de structure de couplage optique **10** est le positionnement dans l'espace de la fibre optique **14** vis-à-vis de la surface de couplage **34**, ou de manière équivalente vis-à-vis du réseau de fentes **32**.

En effet, le taux de couplage entre le guide **12** et la fibre **14** (rapport entre l'amplitude de la lumière à la surface **34** du côté de la fibre optique **14** et l'amplitude de la lumière à la surface **34** du côté du guide d'onde **12**), est optimum lorsque la direction de propagation de la lumière forme un angle θ par rapport à la direction normale à la surface de couplage **34**. Cet angle optimal est communément appelé « angle de couplage ».

L'angle de couplage est fonction de la nature des matériaux et des dimensions de la structure d'adaptation **10**, de l'indice de réfraction du milieu avec lequel est en contact la surface de couplage **34**, et de la longueur d'onde de la lumière transmise, et est usuellement compris entre 0° et 30°. Dès lors que la direction de la lumière s'écarte de l'angle de couplage θ, on observe une dégradation très sensible du taux de couplage, une telle perte pouvant rendre le couplage inefficace.

Il convient donc que la section de sortie **36** de la fibre optique **14** soit le plus perpendiculaire possible à la direction privilégiée de propagation de la lumière définie par l'angle de couplage θ. Le positionnement angulaire de la fibre **14** est ainsi optimal lorsque sa section **36** forme elle-même l'angle de couplage θ avec la surface **34**.

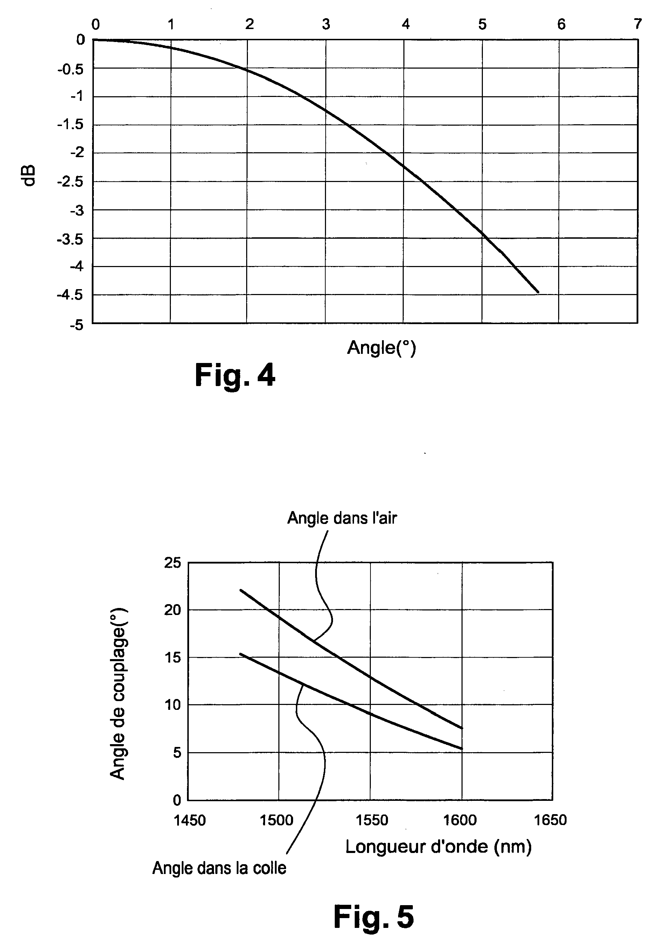

La figure 4 illustre ce phénomène de perte pour un couplage réglé sur la longueur d'onde 1550 nanomètres, une gaine optique supérieure **20** en silice d'indice de réfraction n = 1,44 et d'une épaisseur de 700 nanomètres, un coeur de guide **12** de type ruban en silicium d'indice de réfraction égal à 3,47 et d'une épaisseur de 220 nanomètres se prolongeant, via le « *taper* » **28,** par une région élargie 30 dans laquelle est gravé un réseau **32** de 10 micromètres de largeur et de longueur, la périodicité et la profondeur des fentes étant respectivement de 630 nanomètres et de 70 nanomètres, et une gaine optique inférieure **18** en silice d'indice de réfraction égal à 1,44 et d'une épaisseur de 2 micromètres. Lorsque la surface de couplage **34** est au contact de l'air, d'indice de réfraction égal à 1, l'angle de couplage est alors égal à 10°.

La figure 4 est une courbe en décibel du taux de couplage en fonction de l'écart angulaire de la section de sortie **36** par rapport à l'angle de couplage θ. Comme il est ainsi possible de le constater, un écart angulaire de 2,7° par rapport à l'angle de couplage θ entraine une perte de 20% du taux de couplage. Cette réduction est portée à 40% lorsque l'écart angulaire est égal à 4°.

Non seulement, il convient donc de positionner angulairement la fibre optique **14** avec précision, mais il est également nécessaire de positionner le coeur **24** de la fibre **14** et la surface de couplage **34** sur le même trajet optique. On notera à cet égard qu'un désalignement, même minime, du coeur **24** et de la surface **34** mène également à d'importantes pertes de transmission. Ainsi par exemple, un décentrement de 2 μm réduit la transmission de 15%

Or, le positionnement relatif d'éléments micrométriques est très délicat et requiert une procédure compliquée. Cette procédure consiste, au cours même du positionnement, à mesurer la transmission de la lumière entre la fibre **14** et le guide d'onde **12**, et à considérer le positionnement comme correctement effectuée lorsque la transmission est maximale.

Cependant, il convient également de maintenir la fibre optique **14** en place une fois le positionnement correctement effectué. Or, la seule manière efficace à ce jour pour maintenir la fibre **14** en place est de fixer celle-ci à la gaine supérieure **20** au moyen d'une colle.

Comme dit plus haut, l'angle de couplage θ dépend de l'indice de réfraction du milieu avec lequel la surface de couplage **34** est en contact, et donc de l'indice de réfraction de la colle utilisée. Idéalement donc, le positionnement devrait être réalisé dans la colle afin d'optimiser l'angle de couplage. Or, un positionnement réalisé directement dans la colle nécessite de prévoir un surplus de colle afin de conserver de la colle entre la fibre et le réseau malgré les déplacements de la fibre lors de l'optimisation de son positionnement. Mais surtout, la viscosité de la colle gêne les déplacements de la fibre optique et empêche tout positionnement précis.

Usuellement, il est donc réalisé un positionnement dans l'air, c'est-à-dire un positionnement qui est optimisé pour l'angle de couplage θ dans l'air, puis la colle est ensuite ajoutée pour fixer la fibre **14**. Il s'en suit donc un alignement qui n'est pas réalisé pour le véritable angle de couplage, à savoir celui fonction de l'indice de réfraction de la colle, et en conséquence il en résulte un taux de couplage réduit une fois la colle ajoutée.

La figure 5 illustre la différence entre l'angle de couplage dans l'air et l'angle de couplage dans de la colle d'indice de réfraction égal à 1,45 pour différente longueurs d'onde autour de la longueur d'onde 1550 nanomètres. Comme cela est visible, une différence de plusieurs degrés est observée. Par exemple, on observe une différence d'angle de couplage de 4° entre l'air et la colle. En se référant à la figure 5, ceci équivaut à une réduction du taux de couplage d'environ 40%.

Malgré cette perte importante constatée, la solution consistant dans le positionnement dans l'air suivi du collage est le plus souvent préférée en raison de la difficulté rencontrée lors du positionnement de la fibre optique en présence de colle.

## EXPOSE DE L'INVENTION

Le but de la présente invention est de proposer une structure de couplage optique entre une fibre optique monomode et un guide d'onde planaire nanophotonique monomode du type précité, qui permette un positionnement de la fibre dans l'air tout en réduisant, voire éliminant, le perte de transmission provoquée par l'usage de la colle.

A cet effet, l'invention a pour objet un guide d'onde planaire nanophotonique monomode, comportant un coeur optique, une gaine optique enrobant le coeur optique, et une structure pour le couplage optique du coeur du guide avec le coeur d'une fibre optique monomode, ladite structure de couplage comportant :

■ un élément d'adaptation comprenant un élargissement progressif du coeur du guide d'onde se terminant par une région élargie de dimension adaptée au coeur de la fibre optique ; et
■ un élément de transmission de lumière, connecté optiquement à la région élargie, et définissant une surface plane de couplage par laquelle est transmise la lumière à la fibre optique, le taux de couplage optique au travers de ladite surface lorsque ladite surface est au contact de l'air étant maximum pour un angle de couplage prédéterminé de la lumière par rapport à la surface de couplage

Selon l'invention, le guide d'onde planaire comporte en outre un prisme comprenant une première et une seconde faces planes, la première face étant agencée sur ou au contact de la surface de couplage et la seconde face étant destinée à coopérer optiquement avec la fibre optique, les deux faces étant séparées angulairement l'une de l'autre d'un angle dont la valeur est sensiblement égale à un angle de réfraction dans le prisme à la surface de couplage.

En d'autres termes, le prisme définit une nouvelle surface de couplage pour la transmission de lumière entre le guide d'onde et la fibre optique, présentant la caractéristique selon laquelle l'angle de couplage est à présent nul, c'est-à-dire pour une lumière normale à cette surface. Or, si l'angle de couplage dans l'air est nul, il est également nul pour tout autre matériau, notamment de la colle. L'angle de couplage étant à présent invariant, il est donc possible de réaliser le positionnement dans l'air et d'ajouter ensuite de la colle sans que la variation d'indice de réfraction correspondant induise une variation d'angle et donc une perte de transmission.

On notera à cet égard que la structure globale du guide d'onde de l'état de la technique n'est pas modifiée et que le prisme selon l'invention peut être considéré comme un élément optique de correction angulaire de la structure de couplage classique. Notamment, le prisme de l'invention n'implique aucune modification de l'élément de transmission de l'état de la technique, comme par exemple un réseau périodique de fentes.

En outre, il existe généralement une imprécision sur la valeur de l'angle de couplage associé à la surface de l'élément de transmission en raison, par exemple, des tolérances de fabrication. Cependant, même si le prisme selon l'invention ne compense pas exactement l'angle de couplage de l'élément de transmission, il permet néanmoins de minimiser la variation angulaire résultant de la différence d'indices de réfraction entre l'air et la colle, comme cela sera expliqué plus en détail par la suite.

Selon un mode de réalisation de l'invention, l'élément de transmission comprend un réseau périodique de fentes formé sur une face de la région élargie, le prisme étant agencé sur la gaine optique à l'aplomb du réseau périodique de fentes.

Selon un mode de réalisation, la seconde face du prisme inscrit une section terminale de la fibre optique avec laquelle la seconde face du prisme est destinée à coopérer optiquement.

Selon un mode de réalisation de l'invention, le prisme et une portion de la gaine optique sur laquelle le prisme est agencé ont sensiblement la même valeur d'indice de réfraction, et sont notamment constitués d'un même matériau. Notamment, le prisme et ladite portion sont réalisés en silice.

L'invention a également pour objet un système de couplage optique entre un circuit nanophotonique et une fibre optique monomode, la fibre optique comportant un coeur se terminant par une face plane normale à la direction de propagation de la lumière dans la fibre, qui selon l'invention, comporte :

■ un guide d'onde planaire nanophotonique du type précité ; et
■ des moyens de maintien de la fibre optique de manière à ce que la face plane terminale du coeur de la fibre optique soit en vis-à-vis de, et parallèle à la seconde face du prisme du guide d'onde planaire.

Selon un mode de réalisation, les moyens de maintien comprennent de la colle agencée entre la section plane du coeur de fibre et la seconde face du prisme.

Selon un mode de réalisation, le prisme, une portion de la gaine optique sur laquelle le prisme est agencé, et la colle ont sensiblement la même valeur d'indice de réfraction. Notamment, le prisme et ladite portion sont réalisés en silice, et la colle est constituée d'un polymère de type époxyde.

L'invention a également pour objet l'utilisation d'un prisme dans un guide d'onde planaire nanophotonique de l'état de la technique pour former une surface plane déterminant un taux de couplage dans l'air au travers de ladite surface maximum pour une lumière normale à ladite surface.

## BREVE DESCRIPTION DES FIGURES

L'invention sera mieux comprise à la lecture de la description qui va suivre, donnée uniquement à titre d'exemple, et réalisée en relation avec les dessins annexés, dans lesquels des références identiques désignent des éléments identiques, et dans lesquels :

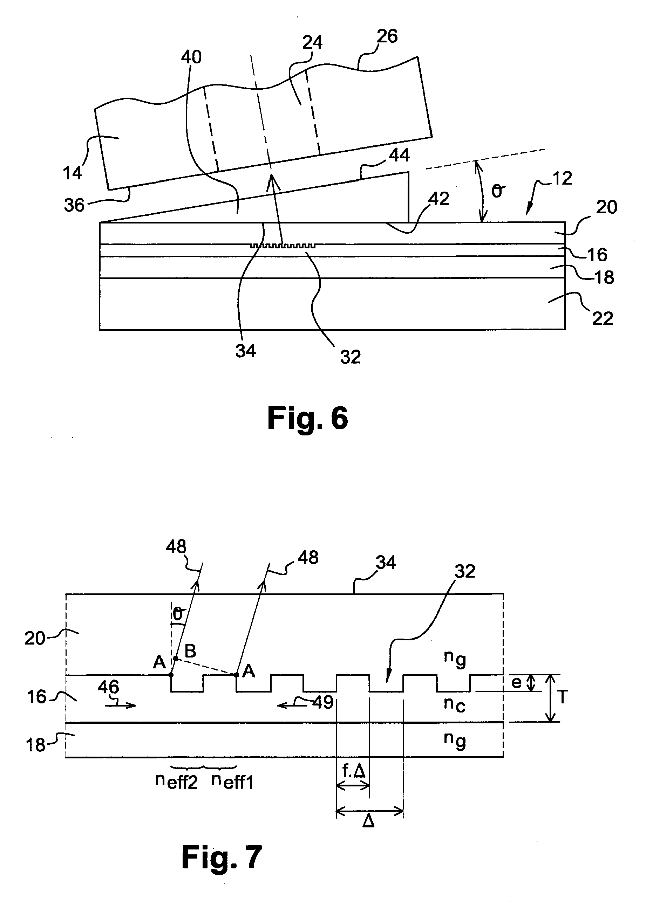

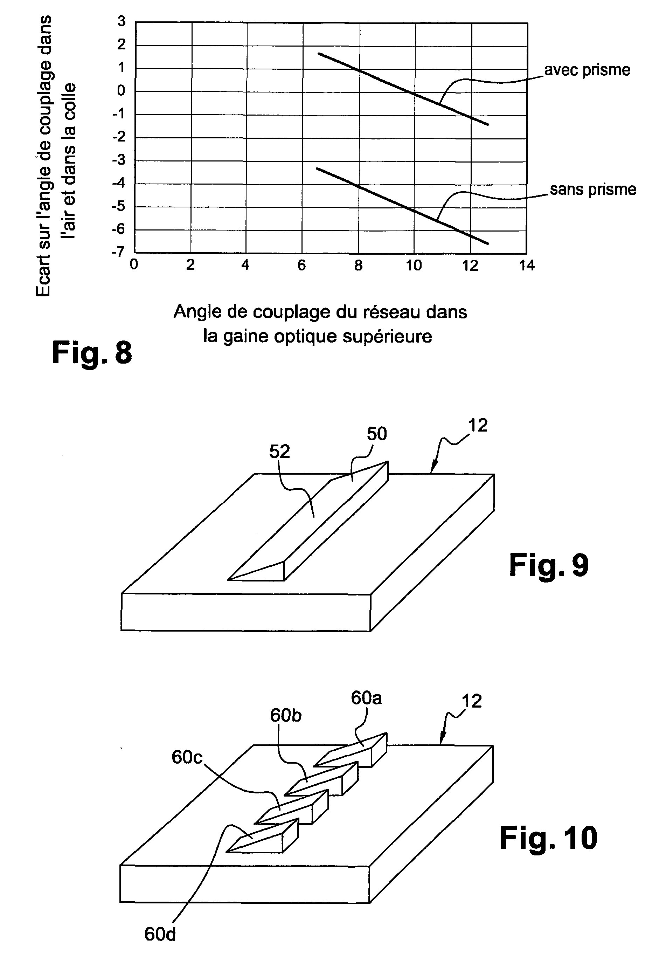

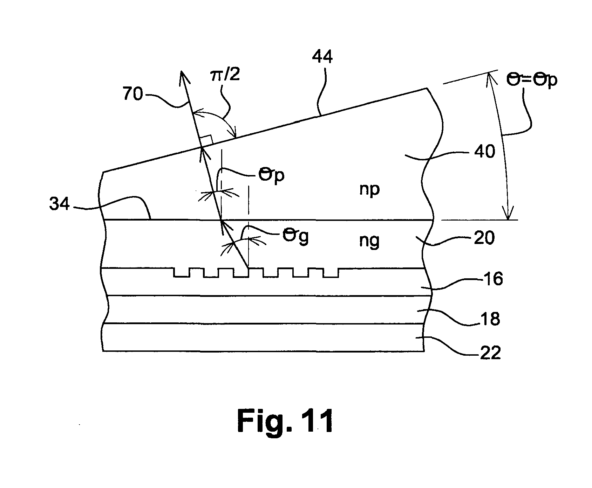

■ les figures 1 et 2 sont respectivement une vue en coupe et une vue de dessus en détail d'un guide d'onde nanophotonique comprenant une structure de couplage optique de l'état de la technique, tel que déjà décrit dans le préambule ;
■ les figures 3A et 3B sont des vues en perspective de deux variantes de réalisation d'un guide d'onde planaire nanophotonique, tel que déjà décrit dans le préambule ;
■ la figure 4 est une courbe en décibel du taux de couplage de la structure de couplage en fonction de l'écart angulaire d'une fibre optique par rapport à l'angle de couplage de la structure de couplage ;
■ la figure 5 est un tracé de l'angle de couplage de la structure des figures 1 et 2, dans l'air et dans une colle, tel que déjà décrit dans le préambule ;
■ la figure 6 est une vue en coupe d'une structure de couplage selon l'invention ;
■ la figure 7 est une vue en coupe plus en détail d'un réseau de fentes de la structure de couplage ;
■ la figure 8 est un tracé de la différence d'angle de couplage entre l'air et la colle, avec ou sans le prisme selon l'invention ;
■ les figure 9 et 10 sont des vues en perspective simplifiée respectivement d'un prisme commun à une pluralité de guides d'onde planaires et d'une pluralité de prismes chacun associé à un guide d'onde d'une pluralité de guides d'onde ; et
■ la figure 11 est une vue élargie de la structure de couplage illustrant les angles de réfraction dans le cas général où les indices de réfraction du guide d'onde et du prisme sont différents.

## DESCRIPTION DETAILLEE DE L'INVENTION

Il est décrit en relation avec la figure 6, un mode de réalisation de l'invention mettant en oeuvre la structure de couplage optique selon l'état de la technique, par exemple celle décrite en relation avec les figures 1 à 3, complétée par un prisme **40** en forme de cale, ayant une première face plane rectangulaire **42** fixée sur la gaine supérieure **20** et recouvrant au moins la surface de couplage **34**, et une seconde face plane rectangulaire **44** formant avec la première face plane **42** un angle égal à l'angle de couplage θ dans l'air de la surface de couplage **34**. L'indice de réfraction $n_p$ du prisme **40** est en outre égal à l'indice de réfraction $n_g$ de la gaine supérieure **20** pour une longueur d'onde sélectionnée, avantageusement pour la longueur d'onde centrale d'un spectre à transmettre entre la structure de couplage optique **10** et la fibre optique **14**, ce spectre étant défini notamment pour l'application considérée de la structure **10** et de la fibre **14**. Le prisme **40** et la gaine supérieure **20** sont par exemple réalisés dans le même matériau.

Ainsi, la seconde face **44** du prisme **42** définit une nouvelle surface de couplage pour laquelle l'angle de couplage est nul. Le taux de couplage optique est ainsi maximal pour une lumière normale au plan de la face **44,** et cela quel que soit le matériau entre la fibre optique **14** et la face **44** du prisme **40**. En plaçant la section **36** de la fibre optique **14** parallèlement la face **44** et au dessus du réseau de fente **32**, et il est ainsi garanti que la transmission entre la fibre optique **14** et le guide d'onde **12** est optimale à la fois dans l'air et dans la colle. Le positionnement de la fibre peut ainsi être réalisé dans l'air sans que l'ajout ultérieur de colle n'impacte le taux de couplage.

L'angle de couplage dans l'air de la surface **34** est aisément calculable numériquement à l'aide d'une modélisation numérique FDTD (« *finite-difference time-domain* ») ou même analytiquement, tel que cela est par exemple décrit dans l'article de C. Kopp, A. Chelnokov, "Fiber grating couplers for silicon nanophotonic circuits: Design modeling methodology and fabrication tolerances", Optics Communications, Volume 282, Issue 21, 4242-4248 (2009).

En se référant à la figure 7, qui est une vue plus en détail du réseau de fentes **32**, afin qu'un faisceau lumineux sorte du réseau de diffraction **32** selon un angle $\theta p$ (couplage propagatif, faisceau **46** vers le faisceau **48**) ou selon un angle $\theta c$ (couplage contre-propagatif, faisceau **49** vers le faisceau **48**), il faut satisfaire à la condition d'accord de phase entre les points **A** et **B**. Ainsi, les phases $\varphi A$ et $\varphi B$, respectivement aux points **A** et **B**, doivent satisfaire la condition :

- $\varphi A - \varphi B = 2\pi.mp$ dans le cas propagatif,
- et $\varphi A - \varphi B = 2\pi.mc$ dans le cas contre-propagatif,

$mp$ et $mc$ étant des nombres entiers.

Le déphasage entre les points **A** et **B** est égal à, dans le cas d'un couplage propagatif (faisceau **46** vers **48**) :

$$\varphi_A - \varphi_B = 2\pi.m_p = \frac{2\pi}{\lambda}.n_g.\Delta.\sin\theta_p - \frac{2\pi}{\lambda}\left[f.\Delta.n_{eff1} + (1-f).\Delta.n_{eff2}\right]$$

et, dans le cas d'un couplage contre-propagatif (faisceau **49** vers **48**) :

$$\varphi_A - \varphi_B = 2\pi.m_c = -\frac{2\pi}{\lambda}.n_g.\Delta.\sin\theta_c - \frac{2\pi}{\lambda}\left[f.\Delta.n_{eff1} + (1-f).\Delta.n_{eff2}\right]$$

$\lambda$ étant la longueur d'onde du faisceau lumineux considéré, et $neff1$ et $neff2$ les indices effectifs des portions de guide d'épaisseurs différentes sur une période du réseau **32**.

Ceci équivaut ainsi au système suivant :

$$n_g.\sin\theta_p - f.n_{eff1} + (f-1)n_{eff2} = \frac{m_p\lambda}{\Delta}$$

$$-n_g.\sin\theta_c - f.n_{eff1} + (f-1)n_{eff2} = \frac{m_c\lambda}{\Delta}$$

L'ensemble des paramètres étant connus, il est ainsi possible de calculer en fonction de ceux-ci l'angle $\theta p$ ou l'angle $\theta c$ suivant le sens de propagation de la lumière dans le guide d'onde **12** (mp et mc étant fixes ; si l'on considère l'ordre + 1 de diffraction, alors m = 1). Connaissant par ailleurs les indices de réfraction de la gaine supérieure **20** et de l'air, on en déduit alors simplement l'angle de couplage $\theta$ à la surface **34** de la gaine **20**.

Bien entendu, lorsque l'angle de couplage de la surface **34** est calculé fonction d'une modélisation mathématique qui utilise des valeurs précises pour les dimensions et les indices des différents éléments du guide d'onde **12** et de sa structure de couplage optique **10**, la valeur ainsi calculée peut être différente de la valeur réelle de l'angle de couplage pour un guide d'onde particulier. En effet, même si les procédés de fabrication des éléments du guide d'onde et de sa structure de couplage visent lesdites valeurs précises, ils présentent néanmoins une précision limitée. De même, le procédé de fabrication du prisme **40** peut également présenter une précision limitée.

En raison des imprécisions de fabrication, le prisme **40** peut ne pas compenser parfaitement l'angle de couplage réel de la surface de couplage **34**. De fait, le problème lié à la différence existant entre l'angle de couplage dans l'air et l'angle de couplage dans la colle peut subsister.

Cependant, quand bien même le prisme **40** serait fabriqué selon un angle entre les faces **42** et **44** différent de l'angle de couplage réel de la structure de couplage **10** à laquelle il est combiné, le prisme **40** a avantageusement pour effet de réduire les pertes provoquées par la différence entre l'angle de couplage dans l'air et l'angle de couplage dans la colle.

En effet, en reprenant l'exemple d'un couplage réglé sur la longueur d'onde 1550 nanomètres, mettant en oeuvre :

- une gaine optique supérieure **20** en silice d'indice de réfraction de réfraction n = 1,44 et d'une épaisseur de 700 nanomètres,
- un coeur de guide d'onde **12** de type ruban en silicium d'indice de réfraction égal à 3,47 et d'une épaisseur de 220 nanomètres

- ledit guide d'onde se prolongeant, via le « *taper* » **28**, par une région élargie **30** dans laquelle est gravé un réseau **32** de 10 micromètres de largeur et de longueur, la périodicité et la profondeur des fentes étant respectivement de 630 nanomètres et de 70 nanomètres,
- et une gaine optique inférieure **18** en silice d'indice de réfraction égal à 1,44 et d'une épaisseur de 2 micromètres ;

l'angle de couplage dans l'air de la surface **34** est égal à 10°. Avec une colle d'indice de réfraction égal à 1,45, l'angle de couplage dans la colle de la surface **34** est alors égal à 6°.

En se référant à la figure 8, et en supposant que les tolérances de fabrication des éléments décrits ci-dessus conduisent à un angle de couplage réel dans l'air compris entre 10° et 19°, l'angle de couplage réel dans la colle est alors compris entre 7° et 13°. Il existe donc une différence maximale entre les deux angles supérieure à 6°, ce qui correspond donc en l'absence de prisme à une réduction possible du taux de couplage supérieure à 5 dB (voir figure 5).

En ajoutant un prisme selon l'invention, dont lesdites première et seconde faces forment entre elles un angle de 10°, la variation de l'angle de couplage dans l'air défini par rapport à la seconde face **42** du prisme n'est plus que de 5.5° à 14.5°. La variation angulaire, lors du passage air/colle, est ainsi au pire de 1.5°, ce qui représente moins de 0,3 dB de réduction du taux de couplage, comme cela est aisément calculable à partir de la formule de réfraction à l'interface entre deux milieux d'indice de réfraction différents.

Ainsi, quand bien même, le prisme ne serait pas effectivement optimisé pour l'angle de couplage réel de la surface **34**, il résulte tout de même de sa mise en oeuvre une réduction sensible des pertes liées à l'introduction de la colle.

De manière avantageuse, les matériaux constitutifs du prisme **40**, de la gaine supérieure **20** et de la colle sont choisis pour offrir la meilleure continuité possible de l'indice de réfraction pour éviter tout écart d'indice entraînant des pertes de transmission par réflexion de Fresnel aux interfaces. Ainsi, les indices de réfraction de la gaine supérieure **20**, du prisme **40** et de la colle sont choisis pour être les plus proches possibles, et de préférence identiques, pour une longueur d'onde, par exemple centrale, du spectre à transmettre entre la structure de couplage optique **10** et la fibre optique **14**. La transmission optique est dans ce cas maximale car il n'y a pas de perte par réflexion aux interfaces et le chemin optique est rectiligne car il n'y a pas de phénomène de réfraction aux interfaces.

Ainsi, un matériau privilégié pour la gaine supérieure **20** et le prisme **40** est la silice d'indice de réfraction égal à 1,44 et la colle est constituée d'un polymère de type époxyde qui présente un indice de réfraction égal à 1,45. Bien entendu, d'autres matériaux peuvent être choisis en fonction du procédé de fabrication utilisé, notamment pour fabriquer le prisme **40**.

De manière avantageuse également, les dimensions du prisme **40** sont choisies de manière à ce que la section **36** de la fibre optique **14** soit inscrite dans la seconde face **44**. Par exemple, pour une gaine optique **26** de la fibre optique **14** d'un diamètre extérieur de 125 micromètres, la longueur et la largeur de la seconde face **44** du prisme **40** sont supérieures ou égales à 125 micromètres. Ceci permet notamment de faciliter le collage ultérieur de la fibre optique **14** à la surface **44** du prisme et de réduire la quantité de colle nécessaire. De préférence cependant, les dimensions du prisme seront choisies les plus faibles possibles afin que le prisme ne présente pas une épaisseur trop importante, susceptible d'induire une perte de transmission. Ainsi par exemple, la largeur et la longueur du prisme sont choisies sensiblement égales à 125 micromètres.

En variante, les dimensions du prisme **40** sont choisies de manière à ce que la première face **42** ait des dimensions sensiblement égales à celles du réseau périodique de fentes, ou des dimensions inférieures à celles du réseau **32**. Les pièces sont ainsi plus petites et donc plus facile à fabriquer. En outre, des réseaux sont usuellement surdimensionnés, typiquement 15 $\mu$m par 10 $\mu$m alors que leur surface réellement utilisée est de 6 $\mu$m par 6 $\mu$m, de manière à pouvoir les voir. Ainsi un prisme de longueur égale à 125 $\mu$m, donne un facteur 10, intéressant pour la fabrication.

Il a été décrit un mode de réalisation dans lequel un couplage optique est réalisé entre une seule fibre optique et un seul guide d'onde. Bien entendu, comme cela est connu de l'état de la technique, un circuit nanophotonique peut contenir plusieurs guides d'onde planaires nécessitant d'être connectés chacun à une fibre optique.

Avantageusement, comme cela est illustré à la figure 9, les structures de couplages **10** des différents guides d'onde planaires nanophotoniques monomodes sont identiques et leurs réseaux périodiques de fentes **32** se terminent sur une même ligne **50**. Un seul prisme **52** est alors réalisé pour simplifier la fabrication.

En variante, comme illustré à la figure 10, un prisme **60a**, **60b**, **60c**, **60d** peut être utilisé par guide d'onde, ce qui permet de concevoir des guides d'onde différents qui peuvent avoir des dimensions différentes.

Le ou les prismes sont fabriqués par microréplication, par exemple par un matriçage à chaud (« *hot embossing* ») ou par un matriçage d'une résine polymérisable aux ultraviolets (« *UV cast embossing* » ou « *UV cast imprint* »). Avantageusement, plusieurs prismes d'une même face d'un circuit nanophotonique sont fabriqués collectivement en une seule opération de micro-réplication.

La micro-réplication consiste à dispenser un composé organique fluide, typiquement une colle époxy ou un matériau thermoplastique transparent à l'état vitreux, à la surface du circuit, sous forme d'une couche dont l'épaisseur avoisine la hauteur visée du prisme. Un moule structuré dont les motifs en creux correspondent au complémentaire des motifs à réaliser, ici le ou les prismes, est ensuite appliqué.

Une fois le moule appliqué, un durcissement par réticulation de la couche structurée de composé organique est réalisé par chauffage ou par application de rayons ultraviolets. Ces techniques sont décrites par exemple dans les documents de Becker et al. « Hot embossing as a method for the fabrication of polymer high aspect ratio structures », J. Sensors and Actuators A: Physical, Volume 83, Issues 1-3, 22 May 2000, Pages 130-135, et de Rudman et al. « Design and fabrication technologies for ultraviolet replicated micro-optics », Opt. Eng. 43(11), 2004.

Le composé organique utilisé pour les prismes est avantageusement un polymère. Par exemple dans le cas d'un matriçage à chaud, il est privilégié une colle optique, par exemple l'epo-tek 353ND fabriqué par la société Epoxy Technology, Inc. ou un polymère thermoplastique, tel que par exemple du PMMA. La colle optique permet d'obtenir des motifs particulièrement stables en température, de par sa température de transition vitreuse élevée (Tg= 120°C) ainsi que sa température de dégradation (Tmax=400°C).

Dans le cas d'un matriçage aux ultraviolet, il est privilégié une colle optique réticulable aux UV, comme par exemple le ChemOptics CO150, fabriqué par la société Chemoptics Inc., ou l'epotek OG142 fabriqué par la société Epoxy Technology, Inc. Ces deux matériaux ont l'avantage de présenter un temps de réticulation aux ultra-violets relativement rapide (de l'ordre de la minute) par rapport aux polymères à réticulation thermique, ce qui aboutit à un cycle de fabrication réduit des prismes.

Il a été décrit des modes de réalisation dans lesquels l'indice de réfraction $n_p$ du prisme **40** est égal à l'indice de réfraction $n_g$ de la gaine supérieure **20** pour une longueur d'onde donnée d'un spectre à transmettre entre ces deux éléments, et dans une variante privilégiée, une identité entre les indices de réfraction du prisme, de la gaine supérieure et de la colle.

Certaines applications peuvent toutefois imposer des indices de réfraction différents pour le prisme **40** et la gaine supérieure **20**, par exemple dans le cas où les matériaux constitutifs de ceux-ci sont imposés. Afin d'obtenir dans un tel cas un couplage optimal entre la structure optique **10** et la fibre optique **14**, l'angle du prisme **40** est également calculé pour compenser l'écart d'indices de réfraction entre le prisme **40** et la gaine supérieure **20** et donc compenser la réfraction angulaire à l'interface entre le prisme **40** et la gaine **20**.

En se référant à la figure 11, qui est une vue élargie de la structure de couplage **10** et du prisme **40**, si on note de manière générale :

■ $\theta_g$ l'angle de couplage dans la gaine supérieure **20** par rapport à la verticale au plan du coeur **16**, et $n_g$ l'indice de réfraction de la gaine supérieure **20** ;

■ $\theta_p$ l'angle de couplage dans le prisme **40** par rapport à la verticale à la surface plane **34** de la gaine **20**, et $n_p$ l'indice de réfraction du prisme **40** ; et

■ $\theta$ l'angle du prisme **40** avec la surface **34**

pour obtenir un faisceau lumineux **70** orthogonal à la surface **44** du prisme **40** et donc un angle de couplage nul avec la fibre optique **14**, l'angle $\theta$ du prisme **40** est choisi égal à l'angle $\theta_p$, auquel cas la relation de Fresnel à l'interface entre le prisme **40** et la gaine **20**, $n_p \times \sin(\theta_p) = n_g \times \sin(\theta_g)$, est vérifiée.

On notera que pour des indices de réfraction identiques pour le prisme **40** et la gaine supérieure **20**, $n_g = n_p$, on a $\theta_g = \theta_p$ et donc $\theta = \theta_p = \theta_g$ des modes de réalisation décrits précédemment.

Le tableau ci-dessous décrit quelques exemples numériques d'indices de réfraction et d'angles.

| $n_g$ | $\theta_g(°)$ | $n_p$ | $\theta_p(°)$ | $\theta$ |
|---|---|---|---|---|
| 1,45 | 10 | 1,3 | 11,2 | 11,2 |
| 1,45 | 10 | 1,4 | 10,4 | 10,4 |
| 1,45 | 10 | 1,45 | 10,0 | 10,0 |
| 1,45 | 10 | 1,6 | 9,1 | 9,1 |
| 1,45 | 10 | 1,7 | 8,5 | 8,5 |

Le tableau suivant décrit des exemples de matériaux pour le prisme **40** avec leurs indices de réfraction respectifs.

| Matériau | Indice de réfraction | Base chimique | Type de réticulation |
|---|---|---|---|
| ChemOptics CO150 | 1,514 | Acrylate | UV |

(suite)

| Matériau | Indice de réfraction | Base chimique | Type de réticulation |
|---|---|---|---|
| Epotek 353ND | 1,5694 | Epoxy | Thermique |
| Epotek OG142 | 1,5692 | Epoxy | UV |
| PMMA | 1,4914 | Polyméthyl - méthacrylate | (thermoplastique) |

Les indices des matériaux décrits ci-dessus sont ceux des produits commercialisés, la composition des matériaux pouvant être modifiée afin d'obtenir des indices de réfraction différents. Par exemple, la composition du ChemOptics CO150 peut être modifiée pour obtenir un indice de réfraction pouvant atteindre la valeur de 1,628.

Il a été décrit des modes de réalisation dans lesquels l'élément de transmission utilisé pour transmettre la lumière dans et hors du coeur **16** du guide optique **12** est un réseau périodique de fentes **32** assurant une fonction de diffraction. Bien entendu, l'invention s'applique à n'importe quel type d'élément de diffraction, dès lors qu'une surface de couplage est définie à la surface du guide d'onde et qui présente un angle de couplage non nul.

**Revendications**

**1.** Guide d'onde planaire nanophotonique monomode, comportant un coeur optique (16), une gaine optique (18, 20) enrobant le coeur optique (16), et une structure (28, 30, 32, 40) pour le couplage optique du coeur (16) du guide d'onde avec le coeur (24) d'une fibre optique monomode (14), ladite structure de couplage (28, 30, 32, 40) comportant :

- un élément d'adaptation (28, 30) comprenant un élargissement progressif (28) du coeur (16) du guide d'onde (12) se terminant par une région élargie (30) de dimension adaptée au coeur (24) de la fibre optique (14) ; et
- un élément de transmission de lumière (32), connecté optiquement à la région élargie (30), et définissant une surface plane de couplage (34) par laquelle est transmise la lumière à la fibre optique (14), le taux de couplage optique au travers de ladite surface (34) lorsque ladite surface (34) est au contact de l'air étant maximum pour un angle de couplage (θ) prédéterminé de la lumière par rapport à la surface de couplage (34),

*caractérisé* **en ce que** le guide d'onde planaire comporte en outre un prisme (40) comprenant une première et une seconde faces planes (42, 44), la première face (42) étant agencée sur ou au contact de la surface de couplage (34), et la seconde face (44) étant destinée à coopérer optiquement avec la fibre optique (14), les deux faces (42, 44) étant séparées angulairement l'une de l'autre d'un angle dont la valeur est sensiblement égale à un angle de réfraction ($\theta_p$) dans le prisme (40) à la surface de couplage (34).

**2.** Guide d'onde selon la revendication 1, *caractérisé* **en ce que** l'élément de transmission comprend un réseau périodique de fentes (32) formées sur une face de la région élargie (30), le prisme (40) étant agencé sur la gaine optique (18, 20) à l'aplomb du réseau périodique de fentes (32).

**3.** Guide d'onde selon la revendication 1 ou 2, *caractérisé* **en ce que** la seconde face (44) du prisme (40) inscrit une section terminale (36) de la fibre optique (14) avec laquelle la seconde face (44) du prisme (40) est destinée à coopérer optiquement.

**4.** Guide d'onde selon la revendication 1, 2 ou 3, *caractérisé* **en ce que** le prisme (40) et une portion (20) de la gaine optique (18, 20) sur laquelle le prisme est agencé ont sensiblement la même valeur d'indice de réfraction, et sont notamment constitués d'un même matériau.

**5.** Guide d'onde selon la revendication 4, *caractérisé* **en ce que** le prisme (40) et ladite portion (20) sont réalisés en silice.

**6.** Système de couplage optique entre un circuit nanophotonique et une fibre optique monomode, la fibre optique (14) comportant un coeur (24) se terminant par une face plane normale (36) à la direction de propagation de la lumière dans la fibre optique (14), *caractérisé* **en ce qu'**il comporte :

- un guide d'onde planaire nanophotonique (12) conforme à l'une quelconque des revendications précédentes ;

et

- des moyens de maintien de la fibre optique (14) de manière à ce que la face plane terminale (36) du coeur (24) de la fibre optique (14) soit en vis-à-vis de, et parallèle à, la seconde face (44) du prisme (40) du guide d'onde planaire (12).

**7.** Système de couplage selon la revendication 6, *caractérisé* **en ce que** les moyens de maintien comprennent de la colle agencée entre la section plane du coeur de fibre et la seconde face du prisme.

**8.** Système de couplage selon la revendication 7, *caractérisé* **en ce que** le prisme (40), une portion (20) de la gaine optique (18, 20) sur laquelle le prisme est agencé, et la colle ont sensiblement la même valeur d'indice de réfraction.

**9.** Système de couplage selon la revendication 8, *caractérisé* **en ce que** le prisme (40) et ladite portion (20) sont réalisés en silice, et la colle est constituée d'un polymère de type époxyde.

**10.** Utilisation d'un prisme (40) dans un guide d'onde planaire nanophonique conforme au préambule de la revendication 1 pour former une surface plane (44) déterminant un taux de couplage dans l'air au travers de ladite surface (44) maximum pour une lumière normale à ladite surface.

**Patentansprüche**

**1.** Planarer, nanophotonischer Monomode-Wellenleiter, der einen optischen Kern (16), einen den optischen Kern (16) umhüllenden optischen Mantel (18, 20) und eine Struktur (28, 30, 32, 40) für die optische Kopplung des Kerns (16) des Wellenleiters mit dem Kern (24) einer optischen Monomode-Faser (14) aufweist, wobei die Kopplungsstruktur (28, 30, 32, 40) Folgendes aufweist:

- ein Passelement (28, 30) mit einer progressiven Ausweitung (28) des Kerns (16) des Wellenleiters (12), die mit einem ausgeweiteten Bereich (30) endet, dessen Abmessung an den Kern (24) der optischen Faser (14) angepasst ist und
- ein Lichtübertragungselement (32), das optisch mit dem ausgeweiteten Bereich (30) verbunden ist und eine ebene Kopplungsfläche (34) definiert, durch die Licht zu der optischen Faser (14) übertragen wird, wobei der optische Kopplungsgrad durch die Fläche (34), wenn die Fläche (34) mit Luft in Kontakt steht, bei einem vorbestimmten Kopplungswinkel ($\theta$) des Lichts mit der Kopplungsfläche (34) maximal ist,

**dadurch gekennzeichnet, dass** der planare Wellenleiter ferner ein Prisma (40) aufweist, das eine erste und eine zweite ebene Fläche (42, 44) aufweist, wobei die erste Fläche (42) auf oder in Kontakt mit der Kopplungsfläche (34) angeordnet ist und die zweite Fläche (44) dazu bestimmt ist, optisch mit der optischen Faser (14) zusammenzuwirken, wobei die beiden Flächen (42, 44) winkelig um einen Winkel voneinander getrennt sind, dessen Wert im Wesentlichen einem Brechungswinkel ($\theta_p$) in dem Prisma (40) an der Kopplungsfläche (34) entspricht.

**2.** Wellenleiter nach Anspruch 1, **dadurch gekennzeichnet, dass** das Übertragungselement ein periodisches Array aus Schlitzen (32) aufweist, die auf einer Fläche des ausgeweiteten Bereichs (30) ausgebildet sind, wobei das Prisma (40) auf dem optischen Mantel (18, 20) lotrecht zum periodischen Schlitze-Array (32) angeordnet ist.

**3.** Wellenleiter nach Anspruch 1 oder 2, **dadurch gekennzeichnet, dass** die zweite Fläche (44) des Prismas (40) einen Endquerschnitt (36) der optischen Faser (14) einbeschreibt, mit der die zweite Fläche (44) des Prismas (40) optisch zusammenwirken soll.

**4.** Wellenleiter nach Anspruch 1, 2 oder 3, **dadurch gekennzeichnet, dass** das Prisma (40) und ein Abschnitt (20) des optischen Mantels (18, 20), auf dem das Prisma angeordnet ist, im Wesentlichen denselben Brechungsindex haben und insbesondere aus ein und demselben Material bestehen.

**5.** Wellenleiter nach Anspruch 4, **dadurch gekennzeichnet, dass** das Prisma (40) und der Abschnitt (20) aus Silikat hergestellt sind.

**6.** Anordnung für eine optische Kopplung zwischen einer nanophotonischen Schaltung und einer optischen Monomode-Faser, wobei die optische Faser (14) einen Kern (24) aufweist, der mit einer ebenen Fläche (36) endet, die senkrecht zu der Ausbreitungsrichtung des Lichts in der optischen Faser (14) ist, **dadurch gekennzeichnet, dass** sie Folgendes aufweist:

- einen planaren nanophotonischen Wellenleiter (12) nach einem beliebigen der vorhergehenden Ansprüche und
- Mittel, um die optische Faser (14) so zu haltern, dass die ebene Endfläche (36) des Kerns (24) der optischen Faser (14) gegenüber der zweiten Fläche (44) des Prismas (40) des planaren Wellenleiters (12) angeordnet ist und parallel hierzu verläuft.

**7.** Kopplungsanordnung nach Anspruch 6, **dadurch gekennzeichnet, dass** die Halterungsmittel Kleber umfassen, der zwischen dem ebenen Faserkernquerschnitt und der zweiten Prismafläche angeordnet ist.

**8.** Kopplungsanordnung nach Anspruch 7, **dadurch gekennzeichnet, dass** das Prisma (40), ein Abschnitt (20) des optischen Mantels (18, 20), auf dem das Prisma angeordnet ist, und der Kleber im Wesentlichen denselben Brechungsindex aufweisen.

**9.** Kopplungsanordnung nach Anspruch 8, **dadurch gekennzeichnet, dass** das Prisma (40) und der Abschnitt (20) aus Silikat hergestellt sind und der Kleber aus einem Polymer des Typs Epoxid besteht.

**10.** Verwendung eines Prismas (40) in einem planaren nanophotonischen Wellenleiter gemäß dem Oberbegriff des Anspruchs 1 zur Bildung einer ebenen Fläche (44) zur Bestimmung eines Grads der Kopplung in der Luft durch die Fläche (44), der für ein zu dieser Fläche senkrechtes Licht maximal ist.

**Claims**

**1.** Single-mode planar nanophotonic waveguide, comprising an optical core (16), a cladding (18, 20) coating the optical core (16), and a structure (28, 30, 32, 40) for the optical coupling of the core (16) of the waveguide with the core (24) of a single-mode optical fibre (14), said coupling structure (28, 30, 32, 40) comprising:

- an adaptation element (28, 30) including a gradual broadening (28) of the core (16) of the waveguide (12) ending in a broadened region (30) of dimension adapted to the core (24) of the optical fibre (14); and
- a light transmission element (32), optically connected to the broadened region (30), and defining a plane coupling surface (34) by which light is transmitted to the optical fibre (14), the optical coupling ratio through said surface (34) when said surface (34) is in contact with the air being maximum for a predetermined coupling angle ($\theta$) of the light relative to the coupling surface (34),

**characterised** in that the planar waveguide further comprises a prism (40) including a first and a second plane face (42, 44), the first face (42) being arranged on or in contact with the coupling surface (34), and the second face (44) being intended to engage optically with the optical fibre (14), the two faces (42, 44) being separated angularly from one another by an angle whereof the value is substantially equal to an angle of refraction ($\theta_p$) in the prism (40) at the coupling surface (34).

**2.** Waveguide as claimed in claim 1, **characterised** in that the transmission element includes a periodic grating of slits (32) formed on one face of the broadened region (30), the prism (40) being arranged on the cladding (18, 20) flush with the periodic slit grating (32).

**3.** Waveguide as claimed in claim 1 or 2, **characterised** in that the second face (44) of the prism (40) inscribes an end section (36) of the optical fibre (14) with which the second face (44) of the prism (40) is intended to engage optically.

**4.** Waveguide as claimed in claim 1, 2 or 3, **characterised** in that the prism (40) and a portion (20) of the cladding (18, 20) on which the prism is arranged have substantially the same refractive index value, and are constituted in particular by one and the same material.

**5.** Waveguide as claimed in claim 4, **characterised** in that the prism (40) and said portion (20) are made of silica.

**6.** System of optical coupling between a nanophotonic circuit and a single-mode optical fibre, the optical fibre (14) comprising a core (24) ending in a plane face normal (36) to the direction of propagation of light in the optical fibre (14), **characterised** in that it comprises:

- a planar nanophotonic waveguide (12) in accordance with any one of the previous claims; and
- means for holding the optical fibre (14) in such a way that the end plane face (36) of the core (24) of the optical fibre (14) is opposite, and parallel, to the second face (44) of the prism (40) of the planar waveguide (12).

7. Coupling system as claimed in claim 6, *characarised* **in that** the holding means include adhesive arranged between the plane section of the fibre core and the second face of the prism.

8. Coupling system as claimed in claim 7, *characterised* **in that** the prism (40), a portion (20) of the cladding (18, 20) on which the prism is arranged, and the adhesive have substantially the same refractive index value.

9. Coupling system as claimed in claim 8, *characterised* **in that** the prism (40) and said portion (20) are made of silica, and the adhesive is constituted by an epoxide polymer.

10. Use of a prism (40) in a planar nanophotonic waveguide in accordance with the pre-characterising portion of claim 1 to form a plane surface (44) determining a coupling ratio in the air through said surface (44) that is maximum for a light that is normal at said surface.

**Fig. 1**
Art antérieur

**Fig. 2**
Art antérieur

**Fig. 3A**
Art antérieur

**Fig. 3B**
Art antérieur

Fig. 4

Angle dans l'air

Angle dans la colle

Fig. 5

**Fig. 6**

**Fig. 7**

Fig. 8

Fig. 9

Fig. 10

Fig. 11

**Littérature non-brevet citée dans la description**

- **C. KOPP ; A. CHELNOKOV.** Fiber grating couplers for silicon nanophotonic circuits: Design modeling methodology and fabrication tolerances. *Optics Communications,* 2009, vol. 282 (21), 4242-4248

- **BECKER et al.** Hot embossing as a method for the fabrication of polymer high aspect ratio structures. *J. Sensors and Actuators A: Physical,* 22 Mai 2000, vol. 83 (1-3), 130-135
- **RUDMAN et al.** Design and fabrication technologies for ultraviolet replicated micro-optics. *Opt. Eng.,* 2004, vol. 43 (11